# EUROPEAN PATENT SPECIFICATION

(11) **EP 1 500 923 B1**
(45) Date of publication and mention of the grant of the patent: **12.09.2012**
(21) Application number: 04254380.1
(22) Date of filing: 22.07.2004
(51) Int. Cl.: G01N 25/72

(54) **Infrared thermography imaging system with actively quenched lamp and method for actively controlling the flash duration**
Bildaufnahmesystem für Infrarotthermographie mit einer aktiv gelöschten Lampe und Verfahren zur aktiven Kontrolle der Blitzdauers
Système d'imagerie de thermographie infrarouge avec un lampe d'extinction actif et procédé pour le contrôle actif de la durée d'un flash

(30) Priority: 24.07.2003 US 627206
(43) Date of publication of application: 26.01.2005
(73) Proprietor: GENERAL ELECTRIC COMPANY, Schenectady, NY 12345 (US)
(72) Inventor: Ringermacher, Harry Israel, Delanson, New York 12053 (US); Filkins, Robert John, Niskayuna, New York 12309 (US); Zhang, Richard S., Rexford, New York 12148 (US)
(74) Representative: Williams, Andrew Richard

(56) References cited:
- DE-A1- 3 016 897
- US-A1- 2002 126 730
- US-B1- 6 367 969
- ANONYMOUS: "Electronic flash quench circuit (Richard A Shroyer)" RESEARCH DISCLOSURE, KENNETH MASON PUBLICATIONS, HAMPSHIRE, GB, vol. 159, no. 39, July 1977 (1977-07), XP007104941 ISSN: 0374-4353
- WILLIAM P. WINFREE, JOSEPH N. ZALAMEDA: "SINGLE SIDED THERMAL DIFFUSIVITY IMAGING WITH A SHUTTERED THERMOGRAPHIC INSPECTION SYSTEM" REVIEW OF QUANTITATIVE NONDESTRUCTIVE EVALUATION, vol. 21, 2002, pages 544-551, XP002317098 AMERICAN INSTITUTE OF PHYSICS
- H.I. RINGERMACHER, D.R. HOWARD, R.J. FILKINS: "FLASH-QUENCHING FOR HIGH RESOLUTION THERMAL DEPTH IMAGING" REVIEW OF QUANTITATIVE NONDESTRUCTIVE EVALUATION, vol. 23, 2004, pages 477-481, XP002317099 AMERICAN INSTITUTE OF PHYSICS

## Description

The invention relates generally to infrared ("IR") thermography and, more particularly, to actively controlling the flash duration of an IR lamp for an IR thermography imaging system.

IR transient thermography is a versatile nondestructive testing technique that relies upon temporal measurements of heat transference through an object to provide information concerning the structure and integrity of the object. Because heat flow through an object is substantially unaffected by the microstructure and the single-crystal orientations of the material of the object, an IR transient thermography analysis is essentially free of the limitations this creates for ultrasonic measurements, which are another type of nondestructive evaluation used to determine wall thickness. In contrast to most ultrasonic techniques, a transient thermographic analysis approach is not significantly hampered by the size, contour or shape of the object being tested and, moreover, can be accomplished ten to one-hundred times faster than most conventional ultrasonic methods if testing objects of large surface area.

One known contemporary application of transient thermography, which provides the ability to determine the size and "relative" location (depth) of flaws within solid non-metal composites, is revealed in U.S. Pat. No. 5,711,603 to Ringermacher et al., entitled "Nondestructive Testing: Transient Depth Thermography." Basically, this technique involves heating the surface of an object of interest and recording the temperature changes over time of very small regions or "resolution elements" on the surface of the object. These surface temperature changes are related to characteristic dynamics of heat flow through the object, which is affected by the presence of flaws. Accordingly, the size and a value indicative of a "relative" depth of a flaw (i.e., relative to other flaws within the object) can be determined based upon a careful analysis of the temperature changes occurring at each resolution element over the surface of the object.

To obtain accurate thermal measurements using transient thermography, the surface of an object must be heated to a particular temperature in a sufficiently short period of time, so as to preclude any significant heating of the remainder of the object. Depending on the thickness and material characteristics of the object under test, a quartz lamp or a high intensity flash-lamp is conventionally used to generate a heat pulse of the proper magnitude and duration. Once the surface of the object is heated, a graphic record of thermal changes over the surface is acquired and analyzed.

Conventionally, an IR video camera has been used to record and store successive thermal images (frames) of an object surface after heating it. Each video image is composed of a fixed number of pixels. In this context, a pixel is a small picture element in an image array or frame, which corresponds to a rectangular area, called a "resolution element" on the surface of the object being imaged. Because the temperature at each resolution element is directly related to the intensity of the corresponding pixel, temperature changes at each resolution element on the object surface can be analyzed in terms of changes in pixel contrast. The contrast data for each pixel is then analyzed in the time domain (i.e., over many image frames) to identify the time of occurrence of an "inflection point" of the contrast curve data, which is mathematically related to a relative depth of a flaw within the object.

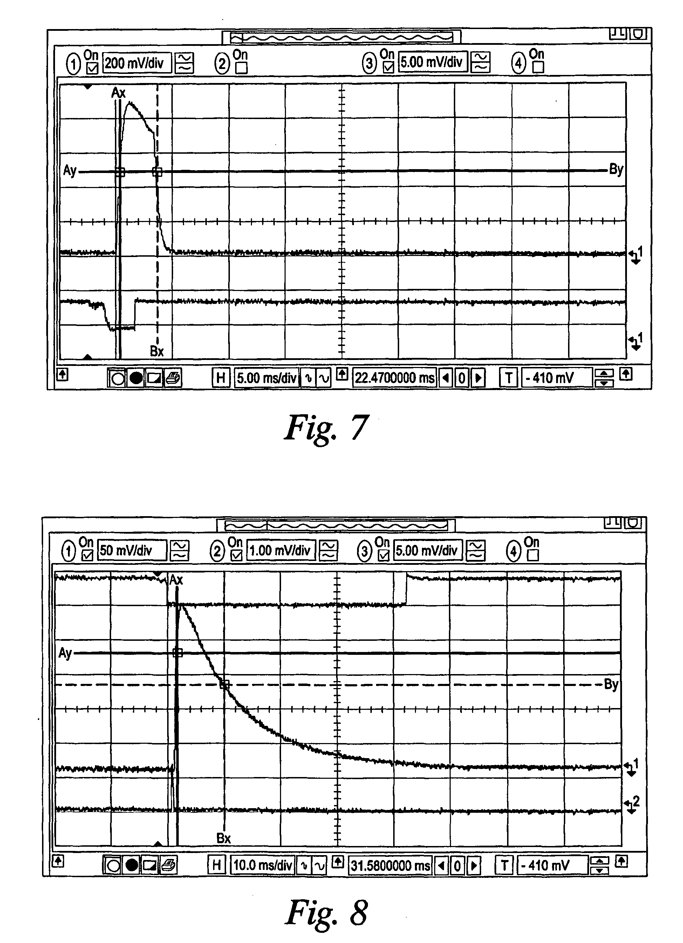

As noted above, data acquisition begins after the surface of the object being inspected is heated by an IR flash. A conventional IR flash is shown in FIG. 8. As shown in FIG. 8, the flash has an exponential tail, which continues to heat the surface of the object. When imaging thin parts, early frames must be analyzed and cannot be discarded. As used here, "early frames" refer to the frames at the beginning of a sequence of images. However, the thermal information in the early frames is distorted by the exponential tail of the flash because the exponential tail continues to heat the surface of the object during acquisition of the early frames. Consequently, the analysis of thin objects using IR thermography is currently limited due to the exponential tail of the flash.

US 6,367,969 B1 discloses an infrared (IR) transient thermography system which employs "special optical filters" to reduce long-wave infrared "afterglow" emissions.

Accordingly, it would be desirable to control the duration of the flash for IR thermography. Moreover, it would be desirable to actively control the duration of the flash for IR thermography, so that the desired flash duration may be selected for a given application.

In one aspect of the invention there is provided an infrared ("IR") thermography imaging system comprising: at least one lamp configured to heat a surface of an object to be imaged; an IR camera configured to capture a plurality of IR image frames of the object; characterised in that the system further comprises at east one active quenching means configured to receive an initial control signal T0 and a control signal T2, and wherein said active quenching means is further configured to allow a current flow I to said lamp in response to the initial control signal T0 and to quench said lamp in response to the control signal T2.

In a second aspect of the invention there is provided a method for actively controlling a duration of a flash for IR thermography. The method includes generating an initial control signal T0, a lamp control signal T1, and a control signal T2. The method further includes activating a quenching means in response to the initial control signal T0, to allow current I to flow to a lamp, activating the lamp in response to the lamp trigger signal T1, and turning off the quenching means in response to the control signal T2 to cut off the current I to the lamp.

The invention will now be described in greater detail, by way of example, with reference to the drawings, in which:-
FIG. 1 illustrates an actively quenched lamp embodiment of the invention, in block form;
FIG. 2 shows an exemplary timing diagram for the actively quenched lamp of FIG. 1;
FIG. 3 shows an example of an active quenching means, in block form;
FIG. 4 shows exemplary circuitry for the actively quenched lamp of FIGS. 1 and 3;
Fig. 5 shows a quenched flash that was cut off at 20 ms;
Fig. 6 shows a quenched flash that was cut off at 10 ms;
Fig. 7 shows a quenched flash that was cut off at 2 ms;
FIG. 8 shows an unquenched flash; and
FIG. 9 illustrates an infrared thermography imaging system embodiment of the invention.

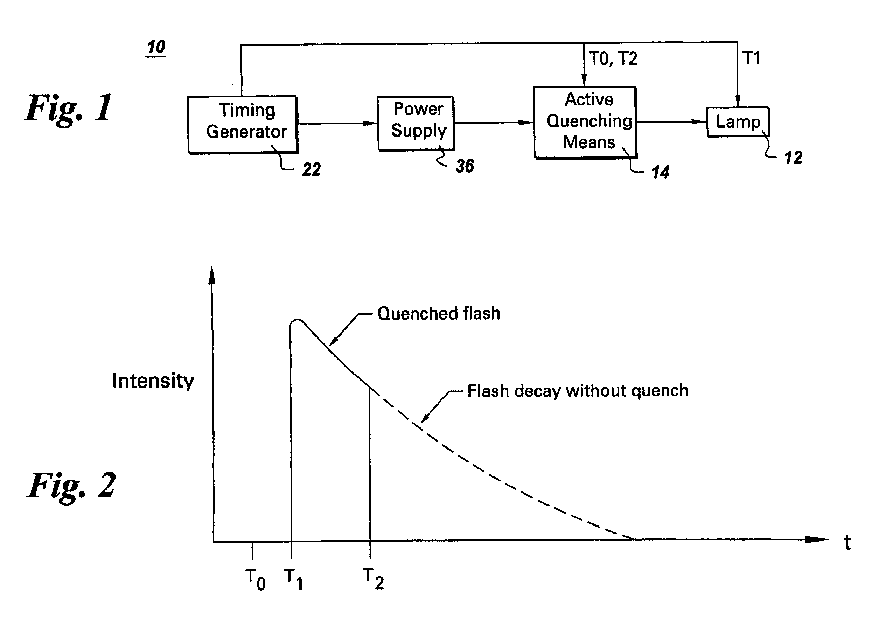

An actively quenched lamp 10 embodiment of the invention is described first with reference to FIGS. 1 and 2. As shown in FIG. 1, the actively quenched lamp 10 includes a lamp 12, and an active quenching means 14 configured to quench the lamp. Exemplary lamps 12 include quartz lamps and high power flash lamps driven by a power supply 36 and used for transient infrared imaging, such as halogen lamps, flash lamps, and arc lamps. One commercially available high power flash lamp is a Speedotron model 105 flash lamp, which can be driven by a Speedotron 4803, 4.8 Kilojoule (KJ) power supply, both of which are manufactured by Speedotron Corp., Chicago, III.

The active quenching means 12 may be a discrete component of the actively quenched lamp 10, as shown in FIG. 1. Another configuration would be to include the active quenching means 12 within another component, for example, within the power supply 36 driving the lamp 12.

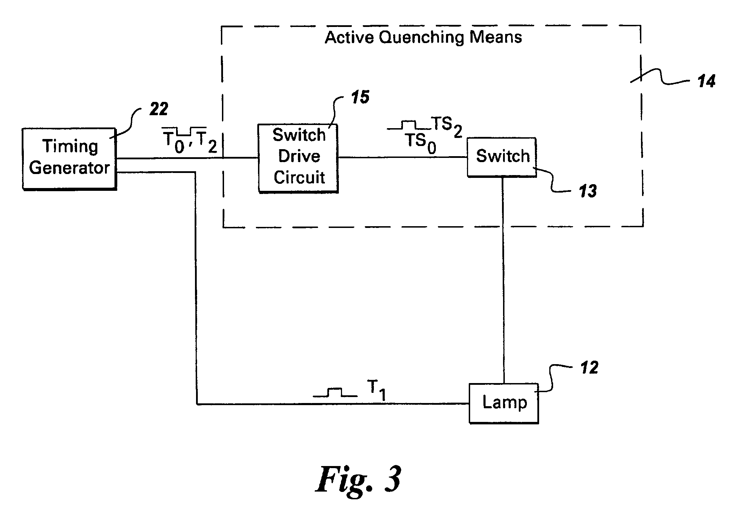

FIG. 2 is an exemplary timing diagram for the actively quenched lamp 10. As indicated in FIGS. 1 and 2, the active quenching means 14 is configured to receive an initial control signal T0 and to allow current I to flow to the lamp 12 in response to the initial control signal T0. As used herein, the term "configured" means being equipped with circuitry, software and/or hardware for performing the stated function. In addition, the active quenching means 14 is configured to receive a control signal T2 and to quench the lamp 12 in response to the control signal T2. As indicated in FIG. 3, for example, exemplary control signals T2 and T0 are the high and low portions, respectively, of a pulse signal.

For the embodiment of FIG. 1, the actively quenched lamp 10 includes a timing generator 22 configured to supply the initial control and control signals T0, T2. The timing generator 22 may also supply a lamp trigger signal T1 to activate the lamp 12. An exemplary timing generator 22 is a computer. It should be noted that the present invention is not limited to any particular computer. The term "computer" is intended to denote any machine that is capable of accepting a structured input and of processing the input in accordance with prescribed rules to produce an output. One exemplary computer 22 is a specially programmed, general purpose digital computer that is capable of peripheral equipment control and communication functions, in addition to digital image processing and display.

The decay time constant T of the lamp 12 is typically characterized by a resistance R and a power supply capacitance C. The time constant T governs the decay time for a flash. As shown in FIG. 2 by the dashed line, without quenching, the flash has an exponential tail. This exponential tail would continue to heat the object during data acquisition, thereby distorting the thermal information in the data frames. A quenched flash is shown by the solid line. As shown, the flash has a duration D of about D=T2-T1. The desired duration D varies by application and is long enough to heat the surface of the object being inspected but short enough to end prior to acquisition of the data frames. An exemplary flash pulse has a desired duration of about 2 milliseconds. Beneficially, by cutting off the exponential tail (shown by the dashed line in FIG. 2), the active quenching means 14 reduces distortion of the thermal information in the data frames. In turn, reducing the distortion of the thermal information in the data frames permits a more accurate analysis.

More particularly, the desired pulse duration is equal to the infrared camera frame period used for the particular application. For example, if the camera operates at 500 frames per second (FPS), the frame period is 0.002 seconds, and the desired pulse duration should be set to 2 ms plus the appropriate preflash duration.

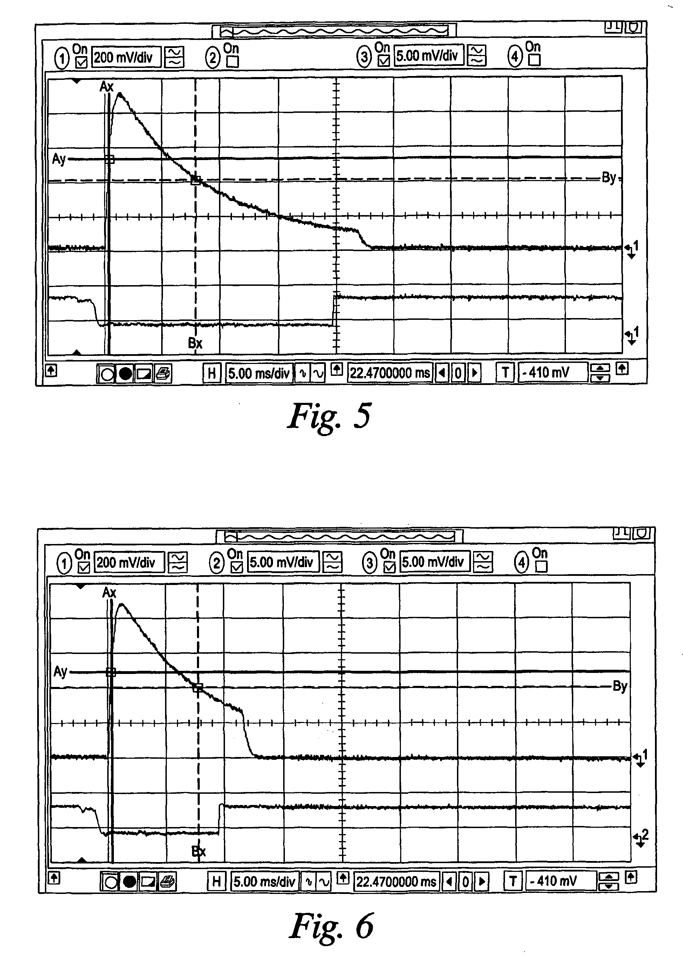

Exemplary quenched flashes are shown in FIGS. 5-7, and an exemplary unquenched flash is shown in FIG. 8. The quenched flashes in FIGS. 5-7 were cut off at 20 ms, 10 ms, and 2 ms, respectively. The flashes were monitored using a high-speed photodiode (not shown) and a digital storage scope (also not shown). FIGS. 5-8 demonstrate variable quenching collateral with the applied gate pulse.

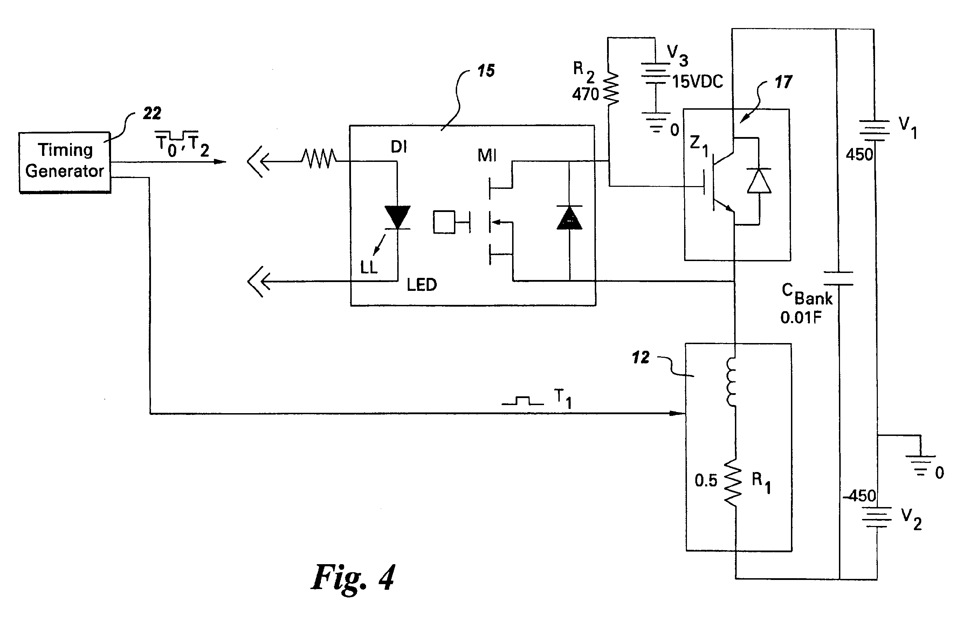

FIG. 3 shows an exemplary active quenching means 14 in block form. As shown, the active quenching means 14 includes a high-voltage, high current switch 13. The switch 13 closes in response to the initial control signal T0, allowing current flow to the lamp 12, and opens in response to the control signal T2, quenching the lamp 12. Exemplary high-voltage, high current switches 13 include power semiconductor switches, such as an insulated gate bipolar transistor "IGBT" 17, as shown for example in FIG. 4, a silicon controlled rectifier (not shown), a gate turn-on thryristor (not shown), MOSFETS (not shown), and an integrated gate commutated thyristor ("IGCT") (not shown). Beneficially, an IGBT 17 has a large current, large voltage standoff handling capacity. In addition, the IGBT 17 is relatively easy to control using its voltage-controlled gate.

For the exemplary embodiment of FIG. 4, the IGBT 17 collector-emitter is in series with the lamp 12 current supply-line. As noted above, the IGBT 17 has a voltage-controlled gate, which is turned on by an appropriate gate voltage V_{G}. This closes the lamp circuit, allowing current I to flow to the lamp 12 and the flash to initiate. For the example shown in FIG. 4, a gate driver was used to apply a 15 V delay-adjusted gate signal to the IGBT 17. The end of the gate pulse, adjusted by the timing generator (or delay generator) 22, opens the lamp circuit, thereby cutting off the exponential tail of the flash at a chosen delay time, in order to produce a more rectangular shaped optical pulse, as indicated in FIG. 2 by the solid line.

For the embodiments of FIGS. 3 and 4, the active quenching means 14 further includes a switch drive circuit 15 (or "gate drive circuit" 15) configured to receive a logic level signal and to generate a switch-drive signal in response. Exemplary logic level signals include TTL, CMOS, and emitter coupled logic (ECL) signals. Exemplary switch drive circuits 15 include an opto-coupler (as shown) and a logic level buffer and level shifter (not shown). An exemplary switch-drive signal is a voltage signal with sufficient magnitude to activate or deactivate a voltage-controlled switch 13, such as IGBT 17. For this embodiment, the initial control signal T0 and the control signal T2 are logic level signals, and the high-voltage, high current switch 13 (here an IGBT 17) closes in response to the switch-drive voltage signal TS0 that corresponds to the initial control signal T0 and opens in response to the switch-drive voltage signal TS2 that corresponds to the control signal T2. Other exemplary switch-drive circuits 15 are configured to receive a logic level signal and to generate a switch-drive current signal in response, to activate or deactivate a current-controlled switch.

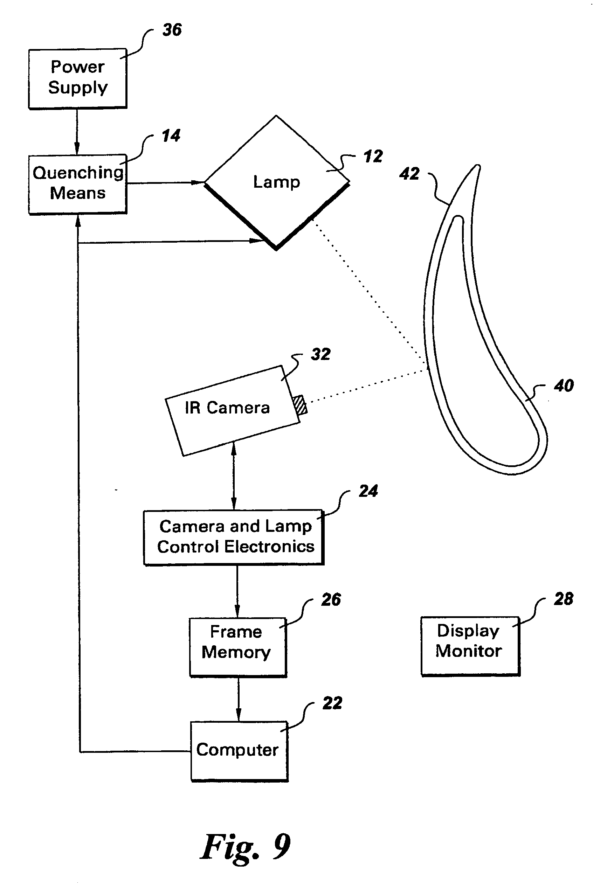

An infrared ("IR") thermography imaging system 30 is described with reference to FIG. 9. As shown, the IR thermography imaging system 30 includes at least one lamp 12 configured to heat a surface 42 of an object 40 to be imaged. Although the exemplary object shown in FIG. 9 is an airfoil, the object 40 may take any form. The imaging system 30 also includes at least one active quenching means 14 configured to quench the at least one lamp 12, and an IR camera 32 configured to capture a number of IR image frames of the object 40. The active quenching means 14 and lamp 12 are described above.

Depending on the size, thickness and other factors of the object 40, several lamps 12 may be used to rapidly heat the surface 42. For example, one suitable arrangement for the lamp(s) 12 is a set of four or eight high speed, high output power photographic flash lamps, each capable of about 4.8 Kilojoules output and having individual power supplies (such as manufactured by Speedotron. Corp., of Chicago, III.).

An exemplary IR camera 36 is an IR video camera configured to record and store successive thermal images (frames) of the object surface 42 after heating by the lamp(s) 12. For example, the IR camera may be an IR sensitive focal-plane camera available from Indigo Systems in Goleta, CA.

For the IR thermography imaging system 30 embodiment of FIG. 9, the system 30 further includes a timing generator 22, such as a computer, which is configured to supply the initial control signal T0 and the control signal T2 to the quenching means 14. The timing generator 22 may be further configured to supply a lamp trigger signal T1 to activate the lamp 12.

Camera and lamp control electronics 24 may be managed by video frame software running on the computer 22. As noted above, an exemplary computer 22 is a specially programmed, general purpose digital computer that is capable of peripheral equipment control and communication functions, in addition to digital image processing and display. For the embodiment of FIG. 9, the computer 22 controls the camera and lamp electronics 24 and frame data memory 26 to acquire a predetermined number of successive thermal image frames of the object surface 42, which are stored in the frame data memory 26 for future analysis. In addition, a display monitor 28 may be provided.

A method embodiment of the invention, for actively controlling a duration of a flash for IR thermography, is also disclosed. The method includes generating an initial control signal T0, a lamp control signal T1, and a control signal T2. A quenching means 14 is activated in response to the initial control signal T0 to allow current I to flow to a lamp 12. The lamp is activated in response to the lamp trigger signal T1. The quenching means is turned off in response to the control signal T2, in order to cut off the current I to the lamp.

According to a more particular embodiment of the method, the initial control signal T0 and the control signal T2 are logic level signals, such as TTL, CMOS, and emitter coupled logic (ECL) signals. For this embodiment, the method also includes generating switch-drive signals TS0 and TS2 in response to the control signals T0 and T2, respectively. The quenching means is turned off by opening a switch in response to the switch-drive signal TS2 and is turned on by closing the switch in response to the switch drive signal TS0. According to a particular embodiment, the switch is voltage-controlled, and the switch-drive signals TS0 and TS2 are voltage signals.

## Claims

1. An infrared ("IR") thermography imaging system (30) comprises:
at least one lamp (12) configured to heat a surface (42) of an object (40) to be imaged;
an IR camera (32) configured to capture a plurality of IR image frames of the object; **characterised in that** the system (30) further comprises at least one active quenching means (14) configured to receive an initial control signal T0 and a control signal T2, and wherein said active quenching means is further configured to allow a current flow I to said lamp (12) in response to the initial control signal T0 and to quench said lamp in response to the control signal T2.

2. The IR thermography imaging system (30) of Claim 1, wherein said active quenching means (14) comprises a high-voltage, high current switch (13), wherein said high-voltage, high current switch closes in response to the initial control signal T0 and opens in response to the control signal T2.

3. The IR thermography imaging system (30) of Claim 2, further comprising a timing generator (22) configured to supply the initial control signal T0 and the control signal T2 and to supply a lamp trigger signal T1, wherein said lamp (12) is activated in response to the lamp trigger signal T1.

4. The IR thermography imaging system (30) of Claim 1, wherein said active quenching means (14) further comprises a switch drive circuit (15) configured to receive a logic level signal and to generate a switch-drive signal in response, wherein the control signal T2 is a logic level signal, and wherein said high-voltage, high current switch (13) opens in response to the switch-drive signal that corresponds to the control signal T2.

5. The IR thermography imaging system (30) of Claim 4, wherein the switch-drive signal is a switch-drive voltage signal.

6. The IR thermography imaging system (30) of Claim 2, wherein said high-voltage, high current switch (13) comprises a power semiconductor switch.

7. The IR thermography imaging system (30) of Claim 2, wherein said high-voltage, high current switch (13) comprises an insulated gate bipolar transistor (17).

8. The IR thermography imaging system (30) of Claim 7, wherein said lamp (12) comprises a halogen lamp.

9. The IR thermography imaging system (30) of Claim 7, wherein said lamp (12) comprises a flash lamp.

10. A method for actively controlling a duration of a flash for infrared ("IR") thermography, said method comprising:
generating an initial control signal T0, a lamp control signal T1, and a control signal T2;
activating a quenching means (14) in response to the initial control signal T0 to allow current I to flow to a lamp (12); activating the lamp in response to the lamp trigger signal T1; and
turning off the quenching means in response to the control signal T2 to cut off the current I to the lamp.

11. The method of Claim 10, wherein the initial control signal T0 and the control signal T2 comprise logic level signals, and wherein said method further comprises:
generating a switch-drive signal TS2 in response to the control signal T2,
wherein said turning off the quenching means comprises opening a switch in response to the switch-drive signal TS2.

## Patentansprüche

1. Infrarot-("IR")-Thermographieaufnahmesystem (30), aufweisend:
wenigstens eine Lampe (12), die dafür eingerichtet ist, eine Oberfläche (42) eines aufzunehmenden Objektes (40) zu erwärmen;
eine IR-Kamera (32), die dafür eingerichtet ist, mehrere IR-Einzelbilder des Objektes aufzunehmen; **dadurch gekennzeichnet, dass** das System (30) ferner wenigstens eine aktive Löscheinrichtung (14) aufweist, die dafür eingerichtet ist, ein Anfangssteuersignal T0 und ein Steuersignal T2 zu empfangen, und wobei die aktive Löscheinrichtung ferner dafür eingerichtet ist, in Reaktion auf das Anfangssteuersignal T0 einen Stromfluss I zu der Lampe (12) zuzulassen, und in Reaktion auf das Steuersignal T2 die Lampe zu löschen.

2. IR-Thermographieaufnahmesystem (30) nach Anspruch 1, wobei die aktive Löscheinrichtung (14) einen Hochspannungs/ Hochstrom-Schalter (13) aufweist, wobei der Hochspannungs/ Hochstrom-Schalter in Reaktion auf das Anfangssteuersignal T0 schließt und in Reaktion auf das Steuersignal T2 öffnet.

3. IR-Thermographieaufnahmesystem (30) nach Anspruch 2, das ferner einen Zeitgebergenerator (22) aufweist, der dafür eingerichtet ist, das Anfangssteuersignal T0 und das Steuersignal T2 zu liefern und ein Lampenauslösesignal T1 zu liefern, wobei die Lampe (12) in Reaktion auf das Lampenauslösesignal T1 aktiviert wird.

4. IR-Thermographieaufnahmesystem (30) nach Anspruch 1, wobei die aktive Löscheinrichtung (14) einen Schaltertreiberschaltkreis (15) aufweist, der dafür eingerichtet ist, ein Signal auf Logikpegel zu empfangen und ein Schaltertreibersignal in Reaktion darauf zu erzeugen, wobei das Steuersignal T2 ein Logikpegel-Signal ist, und wobei der Hochspannungs/
Hochstrom-Schalter (13) in Reaktion auf das Schaltertreibersignal öffnet, das dem Steuersignal T2 entspricht.

5. IR-Thermographieaufnahmesystem (30) nach Anspruch 4, wobei das Schaltertreibersignal ein Schaltertreiber-Spannungssignal ist.

6. IR-Thermographieaufnahmesystem (30) nach Anspruch 2, wobei der Hochspannungs/Hochstrom-Schalter (13) einen Leistungs-Halbleiterschalter aufweist.

7. IR-Thermographieaufnahmesystem (30) nach Anspruch 2, wobei der Hochspannungs/Hochstrom-Schalter (13) einen BipolarTransistor mit isoliertem Gate (17) aufweist.

8. IR-Thermographieaufnahmesystem (30) nach Anspruch 7, wobei die Lampe (12) eine Halogenlampe aufweist.

9. IR-Thermographieaufnahmesystem (30) nach Anspruch 7, wobei die Lampe (12) eine Blitzlampe aufweist.

10. Verfahren zum aktiven Steuern einer Dauer eines Blitzes für Infrarot-("IR")-Thermographie, wobei das Verfahren die Schritte aufweist:
Erzeugen eines Anfangssteuersignals T0, eines Lampensteuersignals T1 und eines Steuersignals T2;
Aktivieren einer Löscheinrichtung (14) in Reaktion auf das Anfangssteuersignal T0, um den Fluss eines Stroms I zu einer Lampe (12) zuzulassen;
Aktivieren der Lampe in Reaktion auf das Lampenauslösesignal T1; und
Ausschalten der Löscheinrichtung in Reaktion auf das Steuersignal T2 um den Strom I zu der Lampe hin abzuschalten.

11. Verfahren nach Anspruch 10, wobei das Anfangssteuersignal T0 und das Steuersignal T2 Logikpegelsignale aufweisen, und wobei das Verfahren ferner die Schritte aufweist:
Erzeugen eines Schaltertreibersignals TS2 in Reaktion auf das Steuersignal T2, wobei das Abschalten der Löscheinrichtung ein Öffnen eines Schalters in Reaktion auf das Schaltertreibersignal TS2 umfasst.

## Revendications

1. Système d'imagerie par thermographie infrarouge (« IR ») (30), comprenant :
au moins une lampe (12) configurée pour chauffer une surface (42) d'un objet (40) dont l'image doit être prise ;
une caméra IR (32) configurée pour prendre une pluralité d'images IR de l'objet ; **caractérisé en ce que** le système (30) comprend en outre au moins un moyen d'extinction actif (14) configuré pour recevoir un signal de commande initial T0 et un signal de commande T2, et dans lequel ledit moyen d'extinction actif est en outre configuré pour permettre à un courant I de circuler vers ladite lampe (12) en réponse au signal de commande initial T0 et pour éteindre ladite lampe en réponse au signal de commande T2.

2. Système d'imagerie par thermographie IR (30) selon la revendication 1, dans lequel ledit moyen d'extinction actif (14) comprend un interrupteur haute tension, fort courant (13), ledit interrupteur haute tension, fort courant (13) se fermant en réponse au signal de commande initial T0 et s'ouvrant en réponse au signal de commande T2.

3. Système d'imagerie par thermographie IR (30) selon la revendication 2, comprenant en outre un générateur de synchronisation (22) configuré pour fournir le signal de commande initial T0 et le signal de commande T2 et pour fournir un signal de déclenchement de lampe T1, dans lequel ladite lampe (12) est activée en réponse au signal de déclenchement de lampe T1.

4. Système d'imagerie par thermographie IR (30) selon la revendication 1, dans lequel ledit moyen d'extinction actif (14) comprend en outre un circuit de commande d'interrupteur (15) configuré pour recevoir un signal de niveau logique et pour générer un signal de commande d'interrupteur en réponse, dans lequel le signal de commande T2 est un signal de niveau logique, et dans lequel ledit interrupteur haute tension, fort courant (13) s'ouvre en réponse au signal de commande d'interrupteur qui correspond au signal de commande T2.

5. Système d'imagerie par thermographie IR (30) selon la revendication 4, dans lequel le signal de commande d'interrupteur est un signal de tension de commande d'interrupteur.

6. Système d'imagerie par thermographie IR (30) selon la revendication 2, dans lequel ledit interrupteur haute tension, fort courant (13) comprend un interrupteur de puissance à semiconducteur.

7. Système d'imagerie par thermographie IR (30) selon la revendication 2, dans lequel ledit interrupteur haute tension, fort courant (13) comprend un transistor bipolaire à grille isolée (17).

8. Système d'imagerie par thermographie IR (30) selon la revendication 7, dans lequel ladite lampe (12) comprend une lampe halogène.

9. Système d'imagerie par thermographie IR (30) selon la revendication 7, dans lequel ladite lampe (12) comprend une lampe éclair.

10. Procédé de commande active de la durée d'un éclair pour thermographie infrarouge (« IR »), ledit procédé comprenant :
la génération d'un signal de commande initial T0, d'un signal de commande de lampe T1 et d'un signal de commande T2 ;
l'activation d'un moyen d'extinction (14) en réponse au signal de commande initial T0 afin de permettre à un courant I de circuler vers une lampe (12) ;
l'activation de la lampe en réponse au signal de déclenchement de lampe T1; et
le blocage du moyen d'extinction en réponse au signal de commande T2 afin de couper le courant I vers la lampe.

11. Procédé selon la revendication 10, dans lequel le signal de commande initial T0 et le signal de commande T2 comprennent des signaux de niveau logique, et dans lequel ledit procédé comprend en outre :
la génération d'un signal de commande d'interrupteur TS2 en réponse au signal de commande T2,
dans lequel ledit blocage du moyen d'extinction comprend l'ouverture d' un interrupteur en réponse au signal de commande d'interrupteur TS2.
